Europäisches Patentamt

European Patent Office

Office européen des brevets

(19)

(11) Publication number : **0 484 024 A1**

## (12) EUROPEAN PATENT APPLICATION

(21) Application number : **91309693.9**

(22) Date of filing : **21.10.91**

(51) Int. Cl.⁵ : **B60N 2/06**

(30) Priority : **27.10.90 GB 9023428**

(43) Date of publication of application :
**06.05.92 Bulletin 92/19**

(84) Designated Contracting States :
**DE FR GB**

(71) Applicant : **Dunlop Cox Limited**
**Glaisdale Parkway**
**Nottingham NG8 4GP (GB)**

(72) Inventor : **Christopher, Hugh Charles**
**7 Grace Drive , Aspley Lane**
**Nottingham NG8 5AG (GB)**

(74) Representative : **Treves, Barry William et al**
**BTR Group Patent & Trade Mark Service P.O.**
**Box 504**
**Erdington Birmingham B24 9QH (GB)**

(54) **Slide assembly for a vehicle seat.**

(57)    A vehicle seat slide assembly manufactured from shaped steel slide members (5,9 ;1,23) and separated by a bearing (7 ;25) formed by injecting a solidifiable polymer composition into a suitable space (2 ;15) between members while under load and allowing the composition to solidify while maintaining the load. The bearing (7 ;25) so formed remains attached to one of the members but breaks away from the other on first operation of the slide assembly.

Fig. 1

EP 0 484 024 A1

This invention relates to a method of forming a bearing in a vehicle seat slide assembly and to a vehicle seat slide assembly which may be formed by the method.

Vehicle seat slide assemblies such as are provided for the fore and aft adjustment of vehicle seats typically comprise a first elongated slide member adapted to be fixed to the vehicle floor and a second elongated slide member for attachment to the vehicle seat and slidably engagably arranged in relation to the first slide member. Bearings are provided between the two members to assist sliding. Normally two pairs of assemblies of seat members are provided, one pair on each side of the seat.

Seat slide members are manufactured from sheet steel by conventional metal forming operations such as stamping, bending and piercing. However, the accuracy of size and shape required is not readily obtainable by these operations. Thus a considerable amount of skill and attention is required to ensure that the assembled product meets the required specification.

The above problem may be substantially reduced or overcome in accordance with one aspect of the present invention in which a method of making a vehicle seat slide assembly comprises assembling in longitudinally slidably interengaging arrangement a first elongated slide member adapted to be fixed to the floor of a vehicle and a second elongated slide member adapted to be fixed to a vehicle seat and providing a bearing between adjacent portions of the first and second slide members characterised in that a load is applied to the assembly of first and second members in such a direction as would be vertical in normal use of the assembly in a vehicle, and simultaneously, a flowable solidifiable polymer composition is introduced into a space between portions of the first and second slide members and then the flowable solidifiable polymer composition is caused or allowed to solidify under load to form the bearing.

In a preferred embodiment of the invention the flowable solidifiable polymer composition is injection moulded into the space and then, if a thermoplastic material, cooled to solidify, or if a reaction mixture, caused or allowed to react and form a solid. The polymer composition will be formulated according to the bearing qualities and thermal characteristics required of the final solid.

According to a further aspect of the present invention a vehicle seat slide assembly comprises a first elongated slide member adapted to be fixed to the floor of a vehicle and a second elongated slide member adapted to be fixed to a vehicle seat, the first and second slide members being assembled in longitudinally slidable interengaging arrangement with a bearing between the first and second slide members characterised in that the interengaging portions of the first and second slide members are separated by a solid polymer composition which remains attached to either the first or second slide member during use of the assembly.

Embodiments of the invention will now be described by way of example only with reference to the accompanying drawings of which:-

Figure 1 shows a transverse cross-sectional view of part of a vehicle seat slide assembly according to one embodiment of the present invention;

Figure 2 shows a scrap side view on line A-A of Figure 1;

Figure 3 shows a transverse cross-sectional view of part of a vehicle seat slide assembly according to a second embodiment of the present invention; and

Figure 4 shows a scrap side view on line B-B of Figure 3.

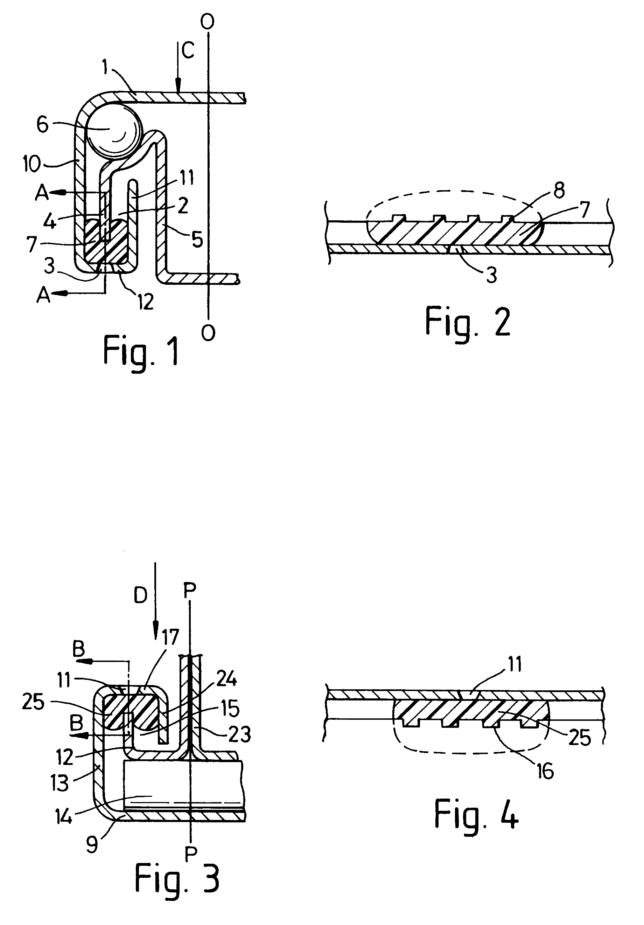

The vehicle seat slide assembly of the first embodiment shown in Figures 1 and 2 comprises a movable first elongated slide member 1 and a second elongated slide member 5 adapted to be fixed to the vehicle floor. Each member is symmetrical about the centre line 0-0 and made from steel strip.

The first member 1 has two generally U section channels 2 formed one on each side of the member. Each channel is formed by the respective upright outer side section 10, a generally upright flange 11 positioned inwards of the outer side, and a base section 12. The base section 12 is provided with a port 3, or a series of ports spaced apart along the length of the slide assembly.

The first member 1 is in slidable interengagement with the second elongated member 5. A pair of flanges 4 of the second slide member 5 are positioned one in each channel of the first member. Surfaces of the first slide member 1 and second slide member 5 form a race for ball bearings 6. Positioned within the base of the channel 2 and around the lower edge of the flange 4 is a solid polymer composition 7 which extends into a plurality of notches 8 spaced-apart along the length of and in the edge of the flange 4.

To form the solid polymer composition 7 the seat slide assembly is constructed and assembled as shown and then a load equivalent to the maximum load which will be applied in use is applied vertically downwards in the direction of the arrow C. Simultaneously with the application of this load a solidifiable polymer composition is injected through the or each inlet port until it has at least extended into the notches 8 and at least partially along the length of the channel 2 thus "interlocking" with the notches 8 in the flange 4. While maintaining the load the pliable solidifiable polymer composition is allowed or caused to solidify, thus forming the solid polymer composition 7 which will act as a bearing and a spacer between channel 2 and flange 4. Any sprue remaining in the or each inlet port 3 will be removed the first time the movable member is moved with respect to the fixed member.

The vehicle seat slide assembly of the second embodiment shown in Figures 3 and 4 comprises a first slide member 9 adapted to be fixed to the vehicle floor and a second, movable slide member 13 for carrying the vehicle seat. Each member is symmetrical about the centre line P-P.

The first member 9 has two inverted generally U section channels 15 formed one on each side of the member. Each channel is formed by the respective outer side section 13, a generally vertical flange 24 projecting downwards, and a top section 17. The top section is provided with a port 11, or a series of ports spaced-apart along the length of the slide assembly.

In slidable engagement with the channel 15 is one of a pair of upright flanges 12 formed one at each side of the movable second slide member 23 which is formed by two shaped metal parts joined together e.g. by welding or rivetting so as to have a generally inverted T-section. Between the under surface of the second slide member 23 and the upper surface of the base of the first slide member 8 is a roller bearing 14 on which the second slide member moves. Positioned within the channel 15 and around the upper edge of the flange 12 is a solid polymer composition 25 which extends into a plurality of notches 16 spaced-apart along the length of and in the upper edge of the flange 12.

To form the solid polymer composition 25 the seat slide member is constructed and assembled as shown and then a load equivalent to the maximum load which will be applied in practice is applied vertically downwards in the direction of the arrow D. Simultaneously with the application of this load the flowable solidifiable polymer composition is injected through the or each inlet port 11 until it has at least extended to the notches 16, and at least partially along the length of the channel 15 thus "interlocking" with notches 16 in the flange 12. While maintaining the load the flowable solidifiable polymer composition is allowed or caused to solidify thus forming the solid polymer composition 15 which will act as a bearing between channel 10 and flange 12. Any sprue remaining in port 11 will be removed the first time the movable member is moved with respect to the fixed member.

In each embodiment the plurality of spaced-apart notches cause the polymer composition to become fixed to the edge of the flange in which the notches are provided so that the plastic bearing so formed remains fixed with respect to one member but is slidable with respect to the other.

In addition, since the members are assembled together and a load applied before the plastic is injected, the shape of the bearing so formed exactly matches the assembly since the outer surfaces of the flanges and the inner surfaces of the channels act as moulding surfaces. Thus any variation which occurs due to the manufacturing operations is automatically allowed for.

In each embodiment polymer may be injected at a plurality of positions along the slide assembly, so that a plurality of separate, spaced apart solid lengths of polymer composition are formed. The spaces separating these lengths allow for differential expansion of the material, usually steel, of the slide members and the polymer composition.

## Claims

1. A method of making a vehicle seat assembly comprising assembling in longitudinal slideable interengaging arrangement a first elongated slide member (5;9) adapted to be fixed to the floor of a vehicle and a second elongated slide member (1;23) adapted to be fixed to a vehicle seat and providing a bearing (7;25) between adjacent portions of the first and second slide members, characterised in that a load is applied to the assembly of first (5;9) and second (1;23) members in such a direction as would be vertical in normal use of the assembly in a vehicle, and simultaneously a flowable solidifiable polymer composition is introduced into a space (2;15) between portions of the first and second slide members and then the flowable solidifiable polymer composition is caused or allowed to solidify under load to form the bearing (7;25).

2. A method according to Claim 1, characterised in that the flowable solidifiable polymer composition (7;25) is injection moulded into the space (2;15) and then, if a thermo plastic material, cooled to solidify.

3. A method according to Claim 1, characterised in that the flowable solidifiable polymer composition (7;25) is injection moulded into the space (2;15) and then, if a reaction mixture, caused or allowed to react and form a solid.

4. A method according to any one of the preceding claims, characterised in that the interengaging portion (4;12) of one of the slide members (5;23) is adapted to be attached to the polymer composition when solidified.

5. A method according to Claim 4, characterised in that said interengaging portion (4;12) of one of the slide members (5;23) is provided with at least one notch (8;16) into which the flowable solidifiable polymer composition enters to thereby cause said attachment.

6. A method according to any one of the preceding claims characterised in that flowable solidifiable polymer composition is injected at a plurality of positions along the slide assembly to form a plurality of separate lengths of polymer composition (7;25).

7. A vehicle seat slide assembly comprising a first elongated slide member (5;9) adapted to be fixed to the floor of a vehicle and a second elongated slide member (1;23) adapted to be fixed to a vehicle seat, the first (5;9) and second (1;23) slide members being assembled in longitudinally slideable interengaging arrangement with a bearing (7;25) between the first (5;9) and second (1;23) slide members, characterised in that the interengaging portions of the first (5;9) and second (1;23) slide members are separated by a solid polymer composition (7;25) which remains attached to either the first (5;9) or second (1;23) slide member during use of the assembly.

8. A vehicle seat slide assembly according to Claim 7, characterised in that the solid polymer composition (7;25) is formed with at least one projection which is positioned in at least one notch (8;16) formed in either the first (5;9) or second (1;23) slide member by means of which the solid polymer composition (7;25) remains attached thereto.

9. A vehicle seat slide assembly according to either Claim 7 or Claim 8, characterised in that an additional bearing member consisting of a ball bearing (6) is included within the assembly between said first (5) and second (1) slide members.

10. A vehicle seat assembly according to either Claim 7 or Claim 8, characterised in that an additional bearing member consisting of a roller bearing (14) is included within the assembly between said first (9) and second (23) slide members.

Fig. 1

Fig. 2

Fig. 3

Fig. 4

**European Patent Office**

# EUROPEAN SEARCH REPORT

Application Number

EP 91 30 9693

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 033 215 (TACHIKAWA SPRINGS)<br>* page 2, line 3 - line 18; figures 5,6 * | 1,2,4,5 | B60N2/06 |
| X | | 7 | |
| Y | US-A-4 861 256 (COVEY)<br>* abstract; figures 1,2,13,19 * | 1,2,4-6 | |
| Y | GB-A-2 110 927 (NISSAN MOTOR COMPANY)<br>* page 1, line 96 - page 2, line 111; figures 25-8 * | 5 | |
| X | | 7,8 | |
| A | | 1 | |
| Y | DE-A-3 522 773 (DEUTSCHE ITT)<br>* page 11, line 23 - page 12, line 30; figures 4,5 * | 6 | |
| X | | 7 | |
| A | | 1 | |
| X | US-A-4 463 922 (REES)<br>* column 2, line 1 - column 3, line 60; figure 5 * | 7,8 | TECHNICAL FIELDS SEARCHED (Int. Cl.5) |
| A | | 1 | B60N<br>B23Q<br>F16C |
| X | PATENT ABSTRACTS OF JAPAN<br>vol. 11, no. 272 (M-622)(2719) 4 September 1987<br>& JP-A-62 074 730 ( TACHI-S. ) 6 April 1987<br>* abstract * | 7,9 | |
| A | | 1 | |
| X | US-A-4 809 939 (MATSUSHIMA)<br>* column 2, line 6 - column 4, line 6; figures 2,6,7 * | 7,10 | |
| A | | 1 | |
| X | GB-A-2 113 538 (NISSAN MOTOR COMPANY)<br>* page 2, line 13 - line 69; figures 5-7 * | 7 | |
| A | | 1 | |

The present search report has been drawn up for all claims

| Place of search | Date of completion of the search | Examiner |
|---|---|---|
| THE HAGUE | 03 DECEMBER 1991 | GATTI Carlo |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document